# EUROPEAN PATENT APPLICATION

(11) **EP 0 634 471 A1**
(43) Date of publication of application: **18.01.1995**
(21) Application number: 94110767.4
(22) Date of filing: 11.07.1994
(51) Int. Cl.: C10J 3/84, C10J 3/46, C10J 3/54

(54) **Coal gasification and sulfur removal process**

(30) Priority: 12.07.1993 US 90420
(71) Applicant: M. W. Kellogg Company, Houston Texas 77210-4557 (US)
(72) Inventor: Campbell, William Martin, Houston, Texas 77090 (US); Henningsen, Gunnar Bagger, Sugar Land, Texas 77479 (US); Katta, Satyanarayana, Spring, Texas 77379 (US); Mathur, Gopal Kishan, Missouri City, Texas 77459 (US)
(74) Representative: Huber, Bernhard, Dipl.-Chem.

(57) **Abstract**

An improved coal gasification process employing fluid bed reactors is disclosed. In the improved process, sulfur absorption on limestone is balanced between gasification and spent solids combustion stages. Part of the sulfur is absorbed during gasification with an *in situ* alkaline sorbent to form a fuel gas. The raw fuel gas is fed to a metallic sorbent desulfurization reactor to remove residual sulfur. The spent metallic sorbent is regenerated with air, steam or a combination thereof, forming a regeneration offgas containing sulfur. The offgas is recycled to the combustion stage where the sulfur is absorbed on the alkaline sorbent from the gasifier. Substantially complete oxidation of sulfides in the limestone sorbent to sulfates can thus be promoted in the combustion stage to substantially eliminate sulfides from process waste solids.

## Description

### Field of the Invention

The present invention relates to a coal gasification and sulfur removal process, and more particularly to a process wherein the sulfur is removed for disposal substantially as an alkaline sulfate.

### Background of the Invention

The use of fluid bed coal gasification for power generation has increased in importance as petroleum reserves have declined, reliance on nuclear energy has diminished and coal reserves remain abundant. The art is currently in a state of rapid change as operating experience leads to improved performance.

Fluid bed processes in general are based on an interaction of solid and gaseous phases to promote a chemical reaction. It is known that performance can be improved substantially by making the solids phase more accessible to the gas phase in terms of surface area available for reaction. However, solids size has generally been limited by separation technology needed to remove entrained particulates. Earliest systems used gas bubbled through a bed of particulates. The so-called "bubbling bed reactor" comprised a substantially continuous solids phase made up of relatively coarse sized particles (<5 cm) and a discontinuous gas phase having a low superficial velocity -- about 0.9-1.5 m/sec. Due to the greater density of the solids phase, a relatively small amount of solids were carried over from the reactor.

The development of high efficiency cyclone separators improved solids separation and permitted the reaction operating regime to be extended beyond the bubbling bed through the turbulent region to a transport hydrodynamic regime. In the fast bed transport regime, particle size is generally less than about 1.5 cm with a superficial velocity of 4.5-6 m/sec. In the pneumatic transport regime, particle size can generally be less than 0.3 mm with a superficial velocity of as much as 12-18 m/sec. With finest particle size and highest velocity, the transport operating regime represents the current state of the art for fluid bed reactor design.

Transition to the transport regime has also improved process control due to enhanced mixing of the reaction medium. As a result, current transport reactors can operate at an elevated pressure -- possibly up to about 4 MPa(g) (about 600 psig) -- to give higher thermal output per unit reactor cross-sectional area and greater output in the power cycle. A pressurized, transport mode fluid bed coal combustor is described in Campbell, "Development of a Transport Mode Pressurized Circulating Fluid Bed Combustor," Power Gen-88, December 7, 1988.

Process improvements have also been made on a macro scale to overcome impediments resulting from sulfur emission control. Since the presence of sulfur in fossil fuels such as coal poses a pollution problem, sulfur emissions have been efficiently controlled using an *in situ* particulate limestone sorbent. Added with the coal feed to the reactor, the limestone can absorb sulfur immediately upon release during the gasification and/or combustion process. The use of *in situ* limestone, however, undesirably limits the operating temperature of a reactor to avoid decomposing the salts formed by sulfur absorption. Consequently, a significant portion of the heat of combustion must be rapidly removed to avoid degradation of the sorbent. In coal gasification, the excess heat of combustion is taken up by the concurrent gasification reaction. Since this reaction is endothermic, the reactor can be operated essentially adiabatically, and the fuel gas produced thereby can be used directly in a gas fired turbine generator.

Gasification, however, is significantly slower than ordinary combustion, and the reactivity of residual ungasified coal (char) becomes progressively reduced as conversion increases. Because the residual, less reactive char can still be burned, a hybridized combustion cycle process called the integrated gasification combined cycle (IGCC) has been developed to combine front end partial gasification in a first reactor followed by combustion of the unconverted char in a second reactor. In the hybrid process, a marginal reduction of conversion in the gasification stage does not severely penalize the overall efficiency of the power cycle since the unconverted material from the gasifer is burned in the combustor for heat recovery. A hybrid design of a fluid bed reactor in power generation is described in O'Donnell, "An Advanced Concept in Pressurized Fluid Bed Combustion," American Society of Mechanical Engineers, 1991, which is hereby incorporated herein by reference.

Gasification of coal and other carbonaceous feeds is well known. Gasification reactors generally include a combustion zone wherein heat is produced to promote gasification in a gasification zone. When coal is gasified, the sulfur released is substantially converted to hydrogen sulfide (H₂S) with some carbonyl sulfide (COS) formation. Hydrogen sulfide reacts with the *in situ* limestone to produce calcium sulfide. However, calcium sulfide is less desirably disposed of in landfills because of its reactivity with water to produce H₂S. Thus, sulfide solids formed during gasification would more desirably be oxidized to the sulfate prior to disposal.

Efforts to oxidize sulfided particles have included circulating the sulfide-containing limestone in a fired sulfator wherein an oxidizing atmosphere is present. However, the sulfating reaction has been found to be difficult to complete. Tests show that the calcium sulfate (CaSO₄) formed initially at the limestone surface can block the pores of the particle and thus effectively prevent oxidation of the interstitial sulfide inside the particle. Typically only 30-35% of the sulfide contained in a limestone particle becomes oxidized in this manner. The use of the generally more expensive dolomite instead of limestone has increased the level of oxidation of the sorbent particle to about 60-70%, but still produces solid waste containing a large proportion of unwanted sulfides.

Oxidation of calcium sulfides formed in a circulating fluid bed coal combustion process is described in U. S. Patent 4,579,070 to Lin et al. which is hereby incorporated herein by reference. Briefly, the coal is burned in a primary combustion zone under partial oxidation conditions and sulfur is captured as alkaline sulfide. The primary combustion products are oxidized in a secondary combustion zone with additional air. The sulfide-containing solids are then separated, from the combustion products, and a portion of the solids is recycled to the primary combustion zone.

### Summary of the Invention

In a coal gasification/combustion process using an alkaline sorbent for *in situ* sulfur removal, it has been discovered that reducing the sulfur loading of a sorbent in the gasification stage can promote substantially complete oxidation of sulfides to sulfates in the spent solids combustion stage, with the result of substantially eliminating sulfide release in the solid waste. Sulfur which is not absorbed by the limestone in the gasification stage can be removed from the product gas in a downstream desulfurization stage using a metallic sorbent. The sulfur captured by the metallic sorbent is recovered as an offgas from the catalyst regeneration, and fed to the combustion stage for absorption onto the partially sulfided sorbent. The combustion stage also effects substantially complete oxidation of the sulfides in the partially sulfided sorbent to sulfates.

The present invention provides an improvement in a fluid bed gasification process. The improvement is applicable to fluid bed coal gasification processes including the following steps: (a) gasifying sulfur-containing coal in the presence of an alkaline sulfur sorbent to form a fuel gas containing sulfur and spent solids containing sulfided sorbent; (b) passing the fuel gas in contact with a metallic sulfur sorbent to form a product fuel gas essentially free of sulfur; (c) regenerating the metallic sorbent to produce a regeneration offgas containing sulfur; (d) contacting the alkaline sulfur sorbent with the regeneration offgas; and (e) sulfating the sulfided sorbent in a combustion zone to convert sulfides to sulfates. The improvement comprises only partially sulfiding an excess of the alkaline sorbent in the gasification step, and feeding the regeneration offgas to the combustion zone for sulfation of the sulfided sorbent in the presence of the regeneration offgas to form a flue gas essentially free of sulfur and a sulfated sorbent essentially free of sulfide.

With the present improvement, less of the sulfur in the coal is absorbed by the *in situ* sorbent in the gasification step, and the balance of the sulfur in the coal is absorbed on the alkaline sorbent in the sulfation step, i.e. a portion of the sulfur is absorbed on the downstream metallic sorbent and supplied to the sulfation step as regeneration offgas. The improvement can further include cooling solids recirculated to the combustion zone in the sulfation step. This can be effected, for example, by exchanging heat to generate steam in a fluidized bed heat exchanger to maintain a suitable operating temperature for sulfur absorption and oxidation in the sulfation step.

The fuel gas/metallic sorbent contact step preferably includes passing the fuel gas through primary and secondary metallic sorbent absorbers in a series. By providing a plurality of desulfurization beds, the fuel gas/metallic sorbent contact and metallic sorbent regeneration steps can be effected concurrently in alternating beds. For example, one bed can be regenerating while a second and a third bed are piped in series for desulfurizing the fuel gas.

The desired degree of sulfide absorption in the coal gasification step can be affected by the ratio of calcium in the limestone and sulfur in the coal which are fed to the gasification step. Preferably, a molar ratio of calcium to sulfur in the coal and limestone feeds to the gasification step is from about 1 to about 2, more preferably above about 1.5.

The sulfation step is preferably effected in a bubbling bed or fast bed combustor, or especially in a pneumatic transport combustor.

The present invention also provides apparatus for the gasification of coal and the removal of sulfur. The apparatus includes a fluid bed coal gasifier, a downstream desulfurization stage and a sulfator having a combustion zone. The gasifier is adapted for combustion and gasification of sulfur-containing coal, for example, in the presence of an alkaline sulfur sorbent to partially sulfide the sorbent with the sulfur released from the coal to form a fuel gas stream and a spent solid stream. The desulfurization stage preferably includes a plurality of metallic sorbent reactors adapted for operating in a desulfurization mode and a regeneration mode, preferably in an alternating service. In the desulfurization mode, sulfur-containing fuel gas from the gasifier is passed to the reactor and sulfur is absorbed onto the metallic sorbent to form a fuel gas having a reduced sulfur content. In the regeneration mode, a regenerating gas such as a mixture of air and steam is introduced to the reactor to regenerate the metallic sorbent for desulfurization, and form a sulfur-containing regeneration offgas. The apparatus also includes a line for supplying the partially sulfided sorbent from the gasifier to the combustion zone in the sulfator, a line for supplying the regeneration offgas to the combustion zone in the sulfator, and a line for recovering sulfated sorbent from the sulfator which is essentially free of sulfide.

The gasifier and sulfator are preferably bubbling bed, fast bed or pneumatic transport reactors, or any suitable combination of these. In particular, the gasifier and sulfator are preferably operable in the transport hydrodynamic regime. Preferably, any two of the metallic sorbent reactors can be beds used as respective primary and secondary desulfurization mode-beds in series, while another reactor is a bed operating in the regeneration mode. In this manner, the apparatus is operable generally continuously by alternating the service of the desulfurization beds between desulfurization and regeneration modes.

### Brief Description of the Drawings

Fig. 1 is a generalized schematic diagram of the coal gasification and sulfur removal process of the present invention wherein bubbling bed reactor design is employed.

Fig. 2 is a schematic diagram of a transport desulfurizer for desulfurizing fuel gas and regenerating metallic sulfur sorbent.

Fig. 3 is a schematic diagram of a hybrid transport gasifier/combustor reactor useful in the process of the present invention wherein the gasifier and combustor are based on a hydrodynamic transport design.

### Detailed Description of the Invention

Sulfur removal in the present fluid bed coal gasification/combustion process is balanced between the coal gasification and spent solids combustion stages to avoid excessive sulfur loading of the sorbent in the gasification stage. In such a manner, oxidation of alkaline sulfides to sulfates is promoted in the combustion stage and the presence of sulfides in the sorbent waste stream can be substantially eliminated.

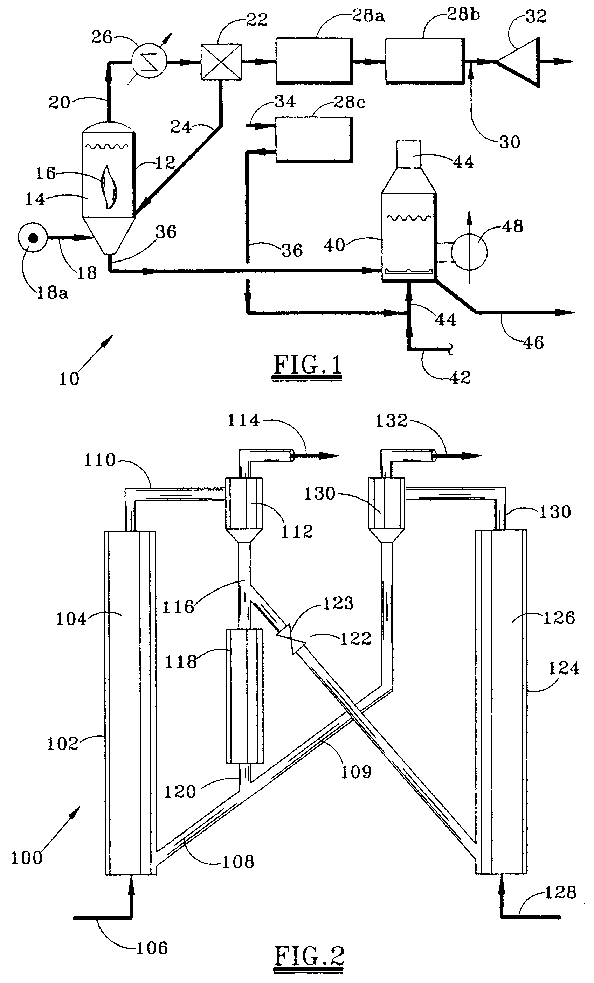

Referring to Figs. 1-3, wherein like numerals reference like parts, the process 10 of the present invention is based on a fluidized bed design for gasification and combustion of a particulated carbonaceous feed as typically employed in power generation. In the combined gasification/combustion process, a fluid bed gasifier produces a hot fuel gas. The solids portion of the feed which is not gasified is burned in a fluid bed combustor to produce a hot flue gas and complete the chemical energy release. Sulfur in the feed is captured by circulating an alkaline sulfur sorbent in the reaction vessels. To produce power, the fuel gas can be burned in a gas turbine generator, for example, and heat can be extracted from the flue gas to produce steam for a steam turbine generator. As mentioned above, three primary modes of gasification are known, including bubbling bed, fast bed and pneumatic transport, and are each suitable for use in the present process.

The process **10** of the present invention employing a bubbling bed design is shown in Fig. 1. The process **10** includes a bubbling bed gasifier **12**. The gasifier **12** comprises a reaction zone within a fluid bed **14** of reacting particles, and a central combustion jet **16**. A solids feed comprising carbonaceous feed particles and sulfur sorbent particles is introduced through line **18** to the bottom of the bubbling bed gasifier **12**. The feed line **18** preferably comprises concentric pipes having the oxidant gas flow in an annular region **18a** and the solids feed is preferably introduced as a high velocity jet using an oxidant supply as propellant to enhance mixing of the feed particles with the particles in the bed.

Any carbonaceous substrate containing sulfur can be used in the present gasification process. Examples of suitable carbonaceous substrates include coal, coke, tar, asphalt, hydrocarbon based polymeric materials such as thermoplastics and rubber, heavy hydrocarbon sludge and bottoms products from petroleum refineries and petrochemical plants, and the like.

The *in situ* sulfur sorbent is any particulated alkaline capable of absorbing and retaining sulfur at the gasification and sulfation conditions without substantial degradation. Examples of suitable sulfur sorbents include limestone and dolomite. As used herein, reference is made to coal as an exemplary but non-limiting carbonaceous substrate. Similarly, limestone is used as an exemplary but non-limiting sulfur sorbent.

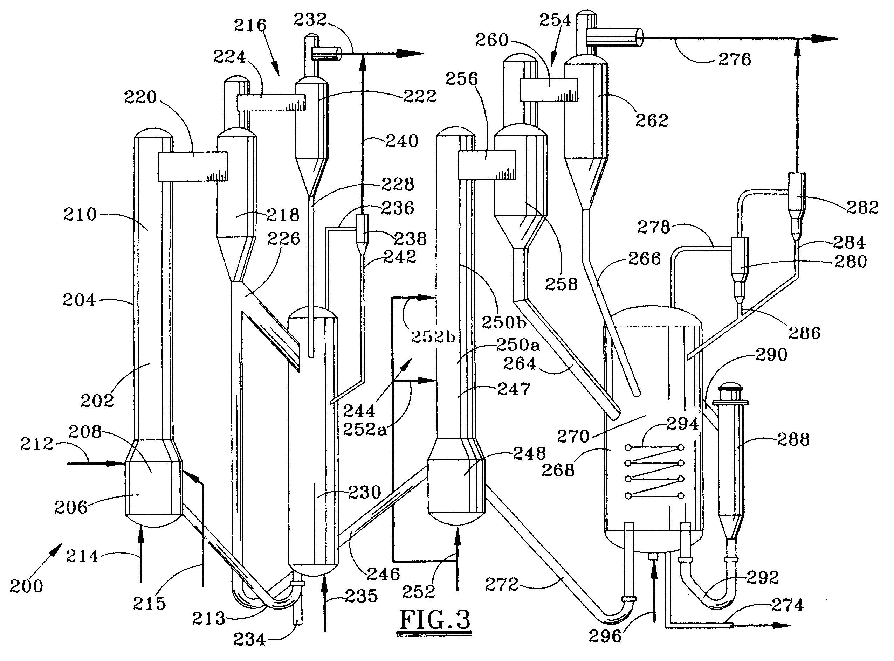

As is well known in the art, raw carbonaceous feed and sulfur sorbent can be prepared by conventional means to facilitate gasification and combustion. For a raw coal and limestone sorbent feed, the solids can be dried (if necessary) and pulverized by milling units such as one or more parallel bowl mills (not shown) before use. Carbonaceous feeds which are liquids at ordinary conditions can be fed directly, or if desired, mixed with water and/or slurried with solid feed(s). In the pneumatic transport gasifier (see Fig. 3), the carbonaceous substrate and sulfur sorbent preferably have an average particle size on the order of 50-200 µm. For the bubbling bed design, the coal and sorbent feeds have conventionally larger particle sizes. Pulverized coal can be dried to a surface moisture level on the order of 3% by a side stream of hot exhaust to facilitate handling of a fine powder.

The oxidant can be oxygen, air, oxygen-enriched air, or a mixture of air and/or oxygen with an inert gas such as nitrogen, argon or the like. Air is preferred for its ready availability and economy.

Combustion in the gasifier **12** involves the feed coal as well as char particles in the bed **14**. Volatiles in the feed tend to evaporate immediately upon entrance into the gasifer **12** and are burned in the vicinity of the combustion jet **16** in the presence of the oxidant supply. The high temperature combustion products rise through the bed **14** of devolatilized coal and partially gasified coal (char) particles to promote gasification of the char in the bed **14**. Steam is preferably introduced in the oxidant supply, and reacts with the devolatilized coal (char) to produce gasification products substantially comprising H₂ and CO. Some cracking also occurs to yield a small concentration of methane and/or ethane, etc. The combustion products set up a rapid recirculation flow which efficiently transfers heat from adjacent the combustion jet **16** to the bed **14** where gasification primarily occurs. As char reacts away from the ash, repeated recycling of the ash-rich mixture adjacent the combustion jet **16** melts low melting point components. The melted components then cool as they return to the bed and agglomerate to permit efficient conversion of even small particles in the feed stock.

Sulfur is released from the coal particles as they react, forming primarily hydrogen sulfide (H₂S) and a minor amount of carbonyl sulfide (COS). The H₂S reacts with the limestone in the bed **14** to form calcium sulfide (CaS). In the practice of the present invention, only a portion of the coal is converted in the gasifier (30-80%), leaving a portion of the sulfur in the residual char. The H₂S and COS formed in the bed **14** are primarily absorbed by the limestone sorbent in the gasifier **12** to partially sulfide the alkaline sorbent. However, the amount of H₂S or COS in the fuel gas leaving the gasifier **12** is generally significant because of incomplete *in situ* sulfur absorption. The desired degree of sulfur absorbence in the gasifier **12** can be controlled to some extent by the use of a sufficient excess of sorbent. In order to maintain sufficient excess absorption capacity in the gasifier **12** a molar ratio of Ca:S in the coal and limestone feeds to the gasifier 12 can be from about 1 to about 2. For low sulfur coal (e. g., 1 weight percent or less) the molar ratio of Ca:S in the feeds is preferably from about 1.1 to about 1.5. For coal having a sulfur content greater than 1 weight percent, a higher molar ratio of Ca:S is preferably used, e. g. from about 1.5 to about 2.0.

The gasifier **12** operates at a temperature and pressure suitable for promoting gasification. Gasification can typically commence at a temperature as low as 788°C (about 1450°F). More usually, the gasifier operates in a temperature range of 840°C-930°C (about 1500°F-1700°F) with higher operating temperatures adjacent the jet **16**. Coal conversion in the gasifier **12** typically ranges between 60-80 percent.

Gasification products, including H₂S not absorbed on the *in situ* sorbent, and any particulates entrained in effluent from the gasifier **12** pass to a particulate removal stage wherein particulate matter is disengaged from the product gas to give a fuel gas essentially free of particulates. For a bubbling bed reactor **12** as seen in Fig. 1, particulate content in the fuel gas is relatively low in a range of 1-2 kg/kg feed. Overhead products from the bubbling bed gasifier **12** pass through line **20** to a filter apparatus **22** employing, for example, ceramic filter candles (not shown). However, other suitable separation devices could be used including cyclone separators, inertial separators, electrostatic precipitators, and the like. Separated particles can be recycled to the gasifier **12** through line **24**. If desired, the gas can first be cooled in a heat exchanger **26** to a temperature suitable for operation of the filtration equipment and downstream desulfurization. Cooling is also desirable to minimize the size of the filter apparatus **22** and limit thermal shock. The cooler **26** typically cools the fuel gas to a temperature between about 400°C and about 570°C by an exchange of heat with a cooling medium such as boiler feedwater, for example, to generate low pressure steam.

For desulfurization of the fuel gas, a variety of processes can be used including "cold" or "wet" chemical absorption. However, the H₂S-containing fuel gas is preferably desulfurized while hot by absorption on a metallic sorbent in one or more beds. The metallic sorbent preferably comprises zinc ferrite, zinc titanite, zinc oxide, and the like or a combination thereof. Desulfurization of the cooled, essentially particulate-free fuel gas is preferably configured with two fixed beds **28a**, **28b** operating in series with a third bed **28c** in a regenerating mode. The fixed beds are preferably arranged so that two beds can be piped in any order while the third regenerates. With three fixed beds, the regeneration mode can take place under optimum sulfur absorption conditions in the fixed beds and in the combustion stage. Two fixed bed reactors in series permit complete saturation of the upstream bed **28a** and light loading on the downstream bed **28b** to maximize sulfur capture efficiency. When the bed **28a** is loaded with sulfur, the bed **28a** is switched to the regeneration mode, the second bed **28b** becomes the first desulfurization bed, and the newly regenerated bed **28c** is placed in service as the second desulfurization bed. Design basis for the sorbent beds **28a**, **28b** and **28c** is preferably less than 30 ppm H₂S in the desulfurized gas. The desulfurized fuel gas can be withdrawn or mixed with an oxidizing gas such as air in line **30** and burned in the operation of a gas turbine **32** used for power production in the conventional power cycle (not shown).

Spent metallic sorbent is conventionally regenerated using a regenerating gas typically comprising a mixture of air and steam to release the absorbed sulfur. The sulfur-lean regenerating gas is introduced to the spent reactor **28c** though line **34** and absorbed sulfides are oxidized to SO₂. An SO₂-rich regeneration offgas is withdrawn through line **36** for sulfur cleanup in the combustion zone of the combustor **40**. Since sulfur can be released from the metallic sorbent at a relatively even rate, the sulfur load in the combustor **40** can be kept steady.

In the process **10**, ungasified char from the gasification stage is burned in the combustion stage. For the bubbling bed design as seen in Fig. 1, the gasifier solids comprising char, ash and partially sulfided sorbent pass from the bottom of the bubbling bed gasifier **12** through line **38** to a bubbling bed combustor **40**. Oxidant for the combustor **40** is injected through line **42** with the SO₂-rich regeneration offgas from the regenerating bed **28c**. The oxidant, preferably air, and SO₂-rich offgas are preferably mixed in line **44** before being fed to the combustor **40** to ensure good mixing of the SO₂ with the circulating sorbent and ash. In the combustor **40**, the char burns and the SO₂ is captured by the limestone as CaSO₄. In addition, the partially sulfided absorbent is oxidized (sulfated) to CaSO₄.

As mentioned previously, the combustor **40** can require heat removal to maintain the required operating temperature. In the combustor **40**, a cooling loop is established to an external fluid bed heat exchanger **48** as seen in Fig. 1, preferably to cool the recirculating solids and generate steam.

In the combustion stage, char combustion and SO₂ absorption is substantially complete (>99%). Combustion products from the combustor **40** can be separated by conventional means such as a ceramic filter (not shown) to give a flue gas essentially free of particulates. Recovered solids can be recycled to the combustor **40** or removed for disposal. Waste solids are removed from the bottom of the combustor **40** through line **46**, and can then be further cooled (not shown) for recovery of additional heat and disposal. The solids waste is essentially free of sulfides to facilitate disposal.

While fixed metallic sorbent beds are provided above as an example, it is to be understood that the sulfur absorption technique using the metallic sorbent can be employed, in fluid beds, moving beds, bubbling beds, turbulent beds, transport absorption reactors and the like. The present invention is not particularly addressed to the type of metallic sorbent sulfur absorption/regeneration equipment and technique, but instead resides at least in part in the feeding of the sulfur-containing regeneration offgas to the sulfator **40** rather than the gasifier **12**.

As one alternative to the fixed metallic sorbent beds, a transport sulfur absorption/regeneration unit **100** is shown in Fig. 2. The transport sulfur absorption/regeneration unit **100** comprises a transport absorber **102** having a riser **104**. In the riser **104**, an H₂S-containing product gas introduced through feed line **106** is contacted with sulfur sorbent particles circulating in the unit **100** and introduced through line **108**. The absorber **102** operates in the transport hydrodynamic range preferably at the pressure and temperature of the feed gas in line **106**.

The absorption of H₂S by the metallic sorbent results in the formation of a metallic sulfide and water. This reaction is typically of low heat release and a relatively large solids recirculation rate is maintained to ensure sufficient sorbent-feedgas contact.

Desulfurized gas containing entrained sorbent particles pass from the absorber riser **104** through line **110** into a gas-solids separator **112** (generally a cyclone separator). A desulfurized product gas which is substantially sorbent-free is removed through line **114**. Separated sorbent particles flow through line **116** into a dense-phase standpipe **118** for recycle through line **120** to the absorber **102**.

A portion of sorbent in line **110**, typically minor, is diverted through line **122** by means such as a solids valve **123** to a transport regenerator **124**. The regenerator **124** has a riser **126** wherein the net sulfur loaded on the sorbent is oxidized to sulfur dioxide by an oxidant supply (generally air plus any diluent) introduced through line **128**. A sulfur dioxide offgas containing entrained regenerated sorbent particles passes from the regeneration riser **126** through line **130** to a gas-solids separator **132** (generally a cyclone separator). A substantially particulate-free sulfur dioxide offgas is removed through line **132** for recovery and further use such as in the sulfator and/or for the synthesis of sulfuric acid. The regenerated sorbent particles recovered in the separator **132** pass through line **109**, are combined with the recirculating sorbent in line **120** and fed together through line **108** as mentioned above to the absorber **102**.

Because the regeneration reaction is highly exothermic, heat must generally be removed by means known in the art such as a sorbent cooler (not shown), a diluent gas in the oxidant supply, or a combination thereof. When the sorbent cooler is employed, the discharge solids from the cyclone separator **130** will generally be recirculated through the cooler and a dense-phase standpipe (not shown) at a sufficient mass recirculation rate to maintain the desired temperature on the sorbent. The cooled particles can be recirculated through the regenerator prior to being fed back to the absorber **102**.

Since the quantity of sorbent diverted from the absorber **102** to the regenerator **124** is a function of the feed gas sulfur content and the sorbent loading, higher sulfur equilibrium loading in the absorber **102** results in a lower sorbent diversion rate, but increases the regeneration exotherm. Consequently, the desulfurization unit **100** is preferably operated at sorbent diversion rates which correspond to an incremental oxidation per pass (in the regenerator **124**), such that the resulting exotherm does not exceed the maximum desired sorbent regeneration temperature, for example, about 55-83°C (about 100-150°F). This is accomplished by operating the regenerator riser as a once-through lift riser to minimize the transport gas requirements to just oxidant in line **128** and holding sulfur loading in the absorber **102** to a low level (e.g. 1-2 weight percent). In addition, oxygen content of the oxidant is maintained at an oxygen deficient condition. As a result, the sorbent in the desulfurization unit **100** is never saturated nor totally regenerated. The advantages of the unit **100** are smaller diameter vessels as compared to bubbling and turbulent operating modes, longer sorbent life, lower sorbent inventory and elimination of sorbent cooling and diluent addition. Furthermore, by avoiding excessive diluent addition, the offgas in line **132** can have a relatively high sulfur dioxide concentration (as much as 16-17% SO₂) suitable for sulfuric acid manufacture.

In a preferred embodiment, the process uses a transport gasifier and combustor as described in commonly assigned copending application U.S. Ser. No. 08/090,601 filed of even date herewith by W.M. Campbell, G. Henningsen, E.A. Gbordzoe and Y.Y. Lin, for Transport Gasifier which is hereby incorporated herein by reference.

Briefly, a process **200** of the present invention employing such a pneumatic transport design is shown in Fig. 3. The process **200** includes an adiabatic transport gasifier **202**. The gasifier **202** comprises a riser **204** adjacent a combustion zone **206**, a feed injection zone **208** and an adiabatic reaction zone **210**. A particle recycle stream in line **213** and an oxidant supply in line **214** are introduced into the combustion zone **206**. Steam is also optionally, but preferably, introduced downstream from the combustion zone **206** through line **215**. In transport mode reactors, solids recirculation is in a range of from about 10 to about 250 kg/kg coal feed. The solids feed comprising the carbonaceous feed and sulfur sorbent particles is introduced through line **212** to the feed injection zone **208** wherein the feed is mixed with substoichiometric combustion products adjacent an inlet to the riser **204**. In this manner, combustion of the volatiles in the coal feed is preferably avoided.

The oxidant supply is generally fed at a rate suitable to control the operating temperature of the gasifier **202** within the desired range. In order to promote formation of CO over CO₂, the oxygen is preferably supplied at a substoichiometric rate relative to the carbon supplied to the combustion zone **206** via line **213**. The oxygen supplied to the combustion zone **206** is preferably less than about 5 percent of the stoichiometric amount required for complete combustion of the recycled char from line **213**.

Gasifier products from the riser **204** preferably pass to a two stage high efficiency cyclone separation zone **216** to disengage particles from the product gas. Overhead products from the riser **204** are initially fed to a primary cyclone **218** through line **220** then to the secondary cyclone **222** through line **224**. Particles separated from the product gas in the primary cyclone **218** and secondary cyclone **222** pass through respective diplegs **226**, **228** into a standpipe **230**. The recycle portion of the particles is conveyed from the standpipe **230** through line **213** to the gasifier combustion zone **206**. Fuel gas exits the secondary cyclone **222** through line **232**, and is directed to a cooler, a desulfurization stage, and the power cycle, as in Fig. 1. If desired, a filter apparatus (not shown) as described above can also be used to remove trace particulates to a level required for proper operation of downstream equipment, particularly turbines, prior to or after desulfurization.

Spent particles comprising ash, sorbent and char recovered from the gasification products are discharged through line **234** for any further heat recovery (not shown) and processing, as desired, before disposal. Inert (free of oxygen) aeration gas comprising fuel gas, exhaust recycle, nitrogen or the like is introduced to standpipe **230** in line **235**, and as required in other solid transfer lines (not shown). Gas vented from standpipe **230** is passed through line **236**, cyclone separator **238** and line **240** into product gas line **232**. Solids separated from the vent gas in separator **238** are returned to standpipe **230** via dipleg **242**.

In the transport mode as seen in Fig. 3, a net forward feed of particles not recycled passes from the gasifier **202** to a transport combustor **244** via dipleg **246** of the primary cyclone **218**. The transport combustor **244** comprises a transport combustion riser **247** having a mixing zone **248** and a combustion zone **250**. An oxidant supply and the SO₂-rich regeneration offgas are introduced to the mixing zone **248** through line **252**. The gas/solids feed mixes in the mixing zone **246** with an internal riser recirculating flow and passes through the transport riser **250** wherein the char burns, the SO₂ present is captured by the limestone as CaSO₄ and partially sulfided alkaline sorbent is oxidized to CaSO₄. In a preferred embodiment, the char combustion in the combustor **244** can be staged using a staged substoichiometric supply of oxidant to limit NOₓ production, substantially as described in U.S. Patent 4,579,070 to Lin et al. which is hereby incorporated herein by reference. Substoichiometric combustion products pass at a high velocity through the staged transport combustion zones **250a**, **250b** wherein an additional supply of approximately stoichiometric amount oxidant is introduced through respective lines **252a**, **252b** to substantially complete the combustion reaction.

Combustion products from the transport combustion zones **250a**, **250b** pass to a two stage high efficiency cyclone separation zone **254** similar to the gasifier separation zone **216** as mentioned earlier. Combustion products pass through line **256** into a primary combustor cyclone **258** and through line **260** to a secondary combustor cyclone **262**. Particles removed in the cyclones **258**, **262** descend through respective diplegs **264**, **266** and are collected in a fluid bed heat exchanger **268** in a holdup zone **270**. A major portion of the recovered solids are recycled through line **272** to the combustor mixing zone **248**. Net waste solids comprising ash and spent sorbent are removed from the exchanger **268** through line **274** or from the mixing zone **248**. An essentially particulate-free flue gas is removed from the secondary combustor cyclone **262** through line **276** for use in the power cycle. Gas vented from the exchanger **268** is passed through line **278**, to cyclone separators **280** and **282** in series, and to flue gas line **276**. Solids recovered in separators **280** and **282** are returned to the exchanger **268** via respective diplegs **284** and **286**.

In the combustor **244**, as seen in Fig. 3, the exchanger **268** has one or more adjacent downflow bayonet type boilers **288** for generating steam and enhancing temperature control flexibility. The boilers **288** can be taken out or put into service depending on overall operating conditions. Solids enter the boiler **288** through line **290** for heat exchange with boiler feed water flowing through internal tubes (not shown). The solids pass from the boiler **288** through line **292**. The exchanger **268** can also have one or more optional coils **294** disposed in the solids holdup zone **270**. An exchange of heat with boiler feedwater and/or steam produces superheated steam for the power cycle and cools the recovered particles prior to recycle to the combustor mixing zone **248**. By setting a suitable solids circulation rate in the cooling loop -- typically from about 100 up to about 750 times the ash/char/sorbent solids feed flow rate for the transport mode, preferably 200 to 250 times -- the combustion temperature can be controlled in the range of from about 815°C (approximately 1500°F) to about 925°C (approximately 1700°F), most favorable for sulfur absorption and to avoid sorbent product decomposition. The cooling circulation rate can conventionally be set by means known in the art, such as controlling the amount of aeration gas (preferably air) introduced through line **296** for fluidization. Within limits, the temperature drop of the solids can be established at any desired value. Generally, the solids temperature drop (ΔT) is between about 25°C (about 45°F) and about 85°C (about 150 °F).

In the gasifier **202** and combustor **244**, the initial design flow conditions set the relative elevations of the various component vessels and establish the design pressure balance. During operation, solids flows can be adjusted by specifying the height of solids in the equipment through the use of plug valves (not shown) and more commonly aeration gas (not shown) to fluidize the solids and effect density changes, similar to the manner in which FCC units are operated.

The power cycle (not shown) employs conventional means such as steam and/or fuel gas-fired turbines to convert energy released by the coal into electricity.

The present invention is further illustrated by reference to the following example and comparative example.

### Example

A coal fired power plant uses the coal gasification process of the present invention employing transport mode reactor design (similar to Fig. 3). Using a low sulfur coal (∼0.36 wt. %), the sulfur absorption balance is as follows: 33% in the gasifier and 67% in the combustor. Due to the favorable sulfur loading balance of the limestone sorbent, solid waste comprises less than 1% sulfides.

### Comparative Example

A coal fired power plant employing coal gasification and low sulfur coal (∼0.36 wt. %) captured most of the sulfur evolved during gasification as CaS in the gasifier. Approximately 90 % of the evolved sulfur was absorbed as a first pass. Approximately 10 % of the sulfur was captured in downstream sorbent beds from the fuel gas, and regeneration offgas was recycled to the gasifier instead of the sulfator. Following sulfation in the combustor, the spent sorbent waste still contained 60-65% of the sulfur absorbed in the form of sulfides.

The present coal gasification and sulfur removal process is illustrated by way of the foregoing description and examples. The foregoing description is intended as a non-limiting illustration, since many variations will become apparent to those skilled in the art in view thereof. It is intended that all such variations within the scope and spirit of the appended claims be embraced thereby.

## Claims

1. In a fluid bed coal gasification process comprising the steps of: (a) gasifying sulfur-containing coal in the presence of an alkaline sulfur sorbent to form a fuel gas containing sulfur and spent solids containing sulfided sorbent; (b) passing the fuel gas in contact with a metallic desulfurization sorbent to form a product fuel gas essentially free of sulfur; (c) regenerating the metallic sorbent to produce a regeneration offgas containing sulfur; (d) contacting the alkaline sulfur sorbent with the regeneration offgas; and (e) sulfating the sulfided sorbent in a combustion stage to convert sulfides to sulfates; the improvement comprising the steps of:
(1) partially sulfiding an excess of the sorbent in the gasification step; and
(2) feeding the regeneration offgas to the combustion stage for sulfation of the sulfided sorbent in the presence of the regeneration offgas to form a flue gas essentially free of sulfur and a sulfated sorbent essentially free of sulfide.

2. The improvement of claim 1, comprising the further step of cooling solids recirculated to the combustion stage in the sulfation step by an exchange of heat to generate steam in a fluidized bed heat exchanger to maintain a suitable operating temperature for sulfur absorption and sorbent oxidation in the sulfation step.

3. The improvement of claim 1, wherein the fuel gas/metallic sorbent contact step (b) includes passing the fuel gas through primary and secondary absorbers in series.

4. The improvement of claim 1, wherein the fuel gas/metallic sorbent contact step (b) and metallic sorbent regeneration step (c) are effected concurrently in alternating metallic sorbent reactors.

5. The improvement of claim 1, wherein the fuel gas/metallic sorbent contact step (b) is effected in first and second fixed bed reactors and metallic sorbent regeneration step (c) is effected concurrently in a third fixed bed reactor.

6. The improvement of claim 1, wherein a molar ratio of Ca:S in coal and limestone feed to the gasification step (a) is from about 1 to about 2.

7. The improvement of claim 1, wherein a molar ratio of Ca:S in coal and limestone feed to the gasification step (a) is from about 1.5 to about 2.

8. Apparatus for the gasification of coal and removal of sulfur, comprising:
(a) a fluid bed coal gasifier adapted for combustion and gasification of sulfur-containing coal in the presence of an alkaline sulfur sorbent to partially sulfide the sorbent to form a fuel gas stream and a spent solids stream;
(b) a plurality of metallic sorbent reactors including at least one adapted for operating in a desulfurization mode wherein sulfur-containing fuel gas from the gasifier is passed therethrough in contact with the metallic sorbent to obtain a product fuel gas having a reduced sulfur content, and at least one adapted for operating in a regeneration mode wherein a regenerating gas is introduced to the reactor to regenerate the metallic sorbent for desulfurization and to form a sulfur-containing regeneration offgas;
(c) a sulfator having a combustion zone;
(d) a line for supplying the partially sulfided sorbent from the gasifier to the combustion zone;
(e) a line for supplying the regeneration offgas to the combustion zone; and
(f) a line for recovering sulfated sorbent from the sulfator essentially free of sulfide.

9. The apparatus of claim 8, wherein the gasifier comprises a transport gasifier wherein the coal feeds to a stream of substoichiometric combustion products.

10. The apparatus of claim 8, wherein the sulfator comprises a transport combustor.

11. The apparatus of claim 8, wherein the metallic sorbent reactors comprise three or more fixed beds of said metallic sorbent, wherein any two of said reactors can be used in a series as primary and secondary desulfurization mode-beds while another bed is in the regeneration mode.
